# EUROPEAN PATENT APPLICATION

(11) **EP 4 701 039 A2**
(43) Date of publication of application: **25.02.2026**
(21) Application number: 25190212.8
(22) Date of filing: 17.07.2025
(51) Int. Cl.: H02J 7/54, H01M 10/44, H02J 7/50

(54) **POWER STORAGE DEVICE**

(30) Priority: 23.08.2024 JP 2024141795
(71) Applicant: KABUSHIKI KAISHA TOYOTA JIDOSHOKKI, Kariya-shi, Aichi 448-8671 (JP)
(72) Inventor: ISHIKAWA, Masanari, Kariya-shi, 448-8671 (JP); HASE, Ryusuke, Kariya-shi, 448-8671 (JP); ADANIYA, Hiroko, Kariya-shi, 448-8671 (JP); AIZAWA, Shinichi, Kariya-shi, 448-8671 (JP)
(74) Representative: TBK

(57) **Abstract**

A power storage device (PS) includes a plurality of batteries (B) connected in series, a cell balancing circuit (CVa, CVb) configured to individually discharge the plurality of the batteries (B), and a controller (Cnt) configured to execute a cell balancing process in which operation of the cell balancing circuit (CVa, CVb) is controlled so that at least one of cell balancing target batteries (B') is discharged by a predetermined state of charge (SOCc), the at least one of the cell balancing target batteries (B') including the battery (B) that is fully charged.

## Description

### BACKGROUND ART

The invention relates to a power storage device including a plurality of batteries connected in series.

There has been known a power storage device in which a plurality of batteries connected in series are individually discharged so that states of charge (a ratio [%] of a remaining capacity to a full charge capacity in each battery) of the batteries are balanced, in order to prevent a usable capacity in the overall power storage device from being limited. Japanese Patent Application Publication No. 2021-036734 discloses a prior art related to this power storage device.

Here, in general, in a battery such as a lithium-ion iron phosphate battery, having a SOC (state of charge)-OCV (open circuit voltage) characteristic in which there is a plateau region where an amount of change in open circuit voltage per unit state of charge is relatively small, it may be difficult to uniquely determine the state of charge from an open circuit voltage when an actual state of charge is within the plateau region.

Accordingly, in the above-described power storage device, when the states of charge of the batteries each having the SOC-OCV characteristic in which the plateau region is present are balanced, the difficulty of the unique determination of each of the states of charge from a corresponding open circuit voltage makes it difficult to estimate an amount of difference in the state of charge between the batteries. This may make it impossible to balance the states of charge of the batteries.

An object according to one aspect of the present invention is, in a power storage device including a plurality of batteries connected in series, to balance states of charge of the batteries.

### SUMMARY

In accordance with an aspect of the present invention, there is provided a power storage device that includes a plurality of batteries connected in series, a cell balancing circuit configured to individually discharge the plurality of the batteries, and a controller configured to execute a cell balancing process in which operation of the cell balancing circuit is controlled so that at least one of cell balancing target batteries is discharged by a predetermined state of charge, the at least one of the cell balancing target batteries including the battery that is fully charged.

Other aspects and advantages of the invention will become apparent from the following description, taken in conjunction with the accompanying drawings, illustrating by way of example the principles of the invention.

### BRIEF DESCRIPTION OF THE DRAWINGS

The invention, together with objects and advantages thereof, may best be understood by reference to the following description of the embodiments together with the accompanying drawings in which:
FIG. 1 is a view illustrating an example of a power storage device in an embodiment;
FIGS. 2A and 2B are views for explanation of a constant current constant voltage charging control;
FIG. 3 is a flowchart showing an example of operation of a controller when the controller executes a cell balancing process;
FIG. 4 is a view for explanation of an example of a method of identifying a cell balancing target battery;
FIG. 5 is a view illustrating an example of a relationship between the number of times of a charging process in a case where the charging process and the cell balancing process are alternately repeated and a difference between a maximum value and a minimum value in states of charge of batteries; and
FIG. 6 is a view illustrating an example of a SOC-OCV characteristic.

### DETAILED DESCRIPTION OF THE EMBODIMENTS

The following will describe an embodiment according to the present invention in detail with reference to the drawings.

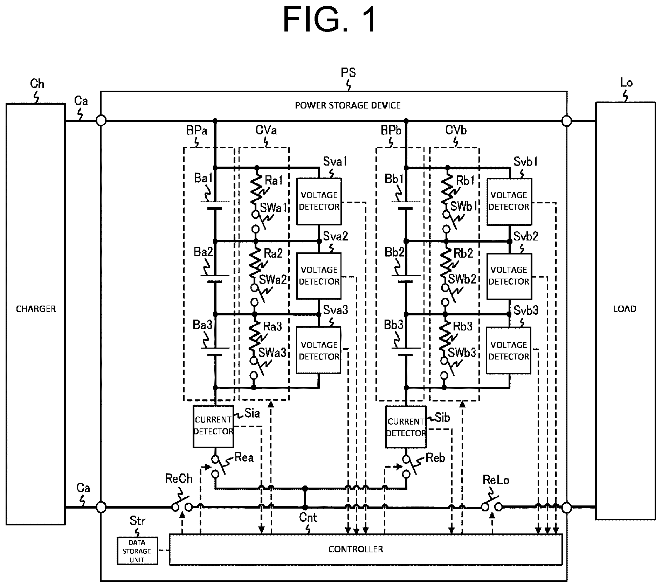

FIG. 1 is a view illustrating an example of a power storage device in the embodiment.

A power storage device PS illustrated in FIG. 1 is, for example, mounted on a vehicle such as an electric forklift or an electric vehicle and supplies a power to a load Lo such as a traveling motor or electrical equipment, which is mounted on the vehicle. In addition, a power output from a charger Ch that is located outside the vehicle is supplied to the power storage device PS.

The power storage device PS includes a battery pack BPa (first battery pack), a battery pack BPb (second battery pack), cell balancing circuits CVa and CVb, voltage detectors Sva1, Sva2, and Sva3, voltage detectors Svb1, Svb2, and Svb3, current detectors Sia and Sib, relays Rea, Reb, ReCh, and ReLo, a data storage unit Str, and a controller Cnt.

The battery pack BPa includes batteries Ba1, Ba2, and Ba3 connected in series to each other, and the battery pack BPb includes batteries Bb1, Bb2, and Bb3 connected in series to each other. Note that the batteries Ba1, Ba2, and Ba3 and the batteries Bb1, Bb2, and Bb3 are each formed of one or more secondary batteries such as lithium-ion iron phosphate batteries or ternary lithium-ion batteries. In addition, the batteries Ba1, Ba2, and Ba3 and the batteries Bb1, Bb2, and Bb3 are different from each other in an amount of decrease of a state of charge (a ratio [%] of a remaining capacity to a full charge capacity in a battery B, which will be described later) per unit time by self-discharge and in an amount of decrease of the full charge capacity per unit time by degradation over time. A difference between a maximum value and a minimum value in the states of charge of the batteries Ba1, Ba2, and Ba3 and the batteries Bb1, Bb2, and Bb3 when they are not charged and discharged increases over time. That is, the states of charge of the batteries Ba1, Ba2, and Ba3 and the batteries Bb1, Bb2, and Bb3 vary due to the self-discharge and the degradation over time. When the battery packs BPa and BPb are not distinguished, each of them is simply referred to as a battery pack BP, and when the batteries Ba1, Ba2, and Ba3 and the batteries Bb1, Bb2, and Bb3 are not distinguished, each of them is simply referred to as a battery B. When the cell balancing circuits CVa and CVb are not distinguished, each of them is simply referred to as a cell balancing circuit CV. When the voltage detectors Sva1, Sva2, and Sva3 and the voltage detectors Svb1, Svb2, and Svb3 are not distinguished, each of them is simply referred to as a voltage detector Sv. Furthermore, the number of the battery packs BP connected in parallel to each other in the power storage device PS is not particularly limited and may be three or more. The number of the batteries B connected in series to each other in the battery pack BP is not particularly limited and may be two or four or more.

The relays Rea, Reb, ReCh, and ReLo are each formed of a semiconductor relay or an electromagnetic relay, and the controller Cnt performs control to switch each of them between a closed state in which current flows and an open state in which current does not flow. For example, in a case where each of the relays Rea, Reb, ReCh, and ReLo is in the open state, the battery packs BPa and BPb are not electrically connected in parallel to each other, a power cannot be supplied from the battery packs BPa and BPb to the load Lo, and a power cannot be supplied from the charger Ch to the battery packs BPa and BPb. Here, when the relays Rea and Reb are each switched from the open state to the closed state, the battery packs BPa and BPb are electrically connected in parallel to each other. Furthermore, the relay ReLo is switched from the open state to the closed state, which allows the power to be supplied from the battery packs BPa and BPb to the load Lo and allows a power to be regenerated in the load Lo and supplied to the battery packs BPa and BPb. Alternatively, the relay ReCh is switched from the open state to the closed state, which allows the power to be supplied from the charger Ch to the battery packs BPa and BPb.

The current detector Sia is formed of a shunt resistor or the like and detects a current la flowing through the battery pack BPa (batteries Ba1, Ba2, and Ba3) and sends a value of the detected current la to the controller Cnt.

The current detector Sib is formed of a shunt resistor or the like and detects a current Ib flowing through the battery pack BPb (batteries Bb1, Bb2, and Bb3) and sends a value of the detected current lb to the controller Cnt. Note that when the current detectors Sia and Sib are not distinguished, each of them is simply referred to as a current detector Si. Furthermore, the current detectors Si, the number of which is the same as that of the battery packs BP, are provided in the power storage device PS.

Thus, a positive electrode terminal of the battery Ba1 is connected to a positive electrode terminal of the battery Bb1, a negative electrode terminal of the battery Ba1 is connected to a positive electrode terminal of the battery Ba2, a negative electrode terminal of the battery Ba2 is connected to a positive electrode terminal of the battery Ba3. A negative electrode terminal of the battery Ba3 is connected to a negative electrode terminal of the battery Bb3 through the current detector Sia, the relay Rea, the relay Reb, and the current detector Sib. A positive electrode terminal of the battery Bb3 is connected to a negative electrode terminal of the battery Bb2, and a positive electrode terminal of the battery Bb2 is connected to a negative electrode terminal of the battery Bb1. A node between the positive electrode terminal of the battery Ba1 and the positive electrode terminal of the battery Bb1 is connected to a positive electrode terminal of the load Lo, and a node between the relay Rea and the relay Reb is connected to a negative electrode terminal of the load Lo through the relay ReLo. In addition, when the power storage device PS is connected to the charger Ch through a charging cable Ca, the node between the positive electrode terminal of the battery Ba1 and the positive electrode terminal of the battery Bb1 is connected to a positive electrode terminal of the charger Ch, and the node between the relay Rea and the relay Reb is connected to a negative electrode terminal of the charger Ch through the relay ReCh.

The voltage detectors Sva1, Sva2, and Sva3 are each formed of an integrated circuit (IC) or the like. The voltage detector Sva1 detects a voltage Va1 of the battery Ba1 and sends a value of the detected voltage Va1 to the controller Cnt using a controller area network (CAN) communication or the like. The voltage detector Sva2 detects a voltage Va2 of the battery Ba2 and sends a value of the detected voltage Va2 to the controller Cnt using the CAN communication or the like. The voltage detector Sva3 detects a voltage Va3 of the battery Ba3 and sends a value of the detected voltage Va3 to the controller Cnt using the CAN communication or the like. The voltage detectors Sva1, Sva2, and Sva3 are driven by powers supplied from the batteries Ba1, Ba2, and Ba3, respectively. Accordingly, when current consumption in the voltage detectors Sva1, Sva2, and Sva3 varies, the states of charge of the batteries Ba1, Ba2, and Ba3 may vary due to operation of the voltage detectors Sva1, Sva2, and Sva3.

The voltage detectors Svb1, Svb2, and Svb3 are each formed of an integrated circuit (IC) or the like. The voltage detector Svb1 detects a voltage Vb1 of the battery Bb1 and sends a value of the detected voltage Vb1 to the controller Cnt using the CAN communication or the like. The voltage detector Svb2 detects a voltage Vb2 of the battery Bb2 and sends a value of the detected voltage Vb2 to the controller Cnt using the CAN communication or the like. The voltage detector Svb3 detects a voltage Vb3 of the battery Bb3 and sends a value of the detected voltage Vb3 to the controller Cnt using the CAN communication or the like. The voltage detectors Svb1, Svb2, and Svb3 are driven by powers supplied from the batteries Bb1, Bb2, and Bb3, respectively. Accordingly, when current consumption in the voltage detectors Svb1, Svb2, and Svb3 varies, the states of charge of the batteries Bb1, Bb2, and Bb3 may vary due to operation of the voltage detectors Svb1, Svb2, and Svb3.

The cell balancing circuit CVa includes resistors Ra1, Ra2, and Ra3 and switches SWa1, SWa2, and SWa3. That is, the cell balance circuit CVa is a passive cell balancing circuit in which the batteries Ba1, Ba2, and Ba3 are individually discharged by consuming output powers from the batteries Ba1, Ba2, and Ba3 by the resistors Ra1, Ra2, and Ra3, respectively. Note that the switches SWa1, SWa2, and SWa3 are each formed of a metal oxide semiconductor field effect transistor (MOSFET) or the like, and the controller Cnt performs control to switch each of them between a closed state in which current flows and an open state in which current does not flow.

One terminal of the resistor Ra1 is connected to the positive electrode terminal of the battery Ba1, the other terminal of the resistor Ra1 is connected to one terminal of the switch SWa1, the other terminal of the switch SWa1 is connected to one terminal of the resistor Ra2 and a node between the negative electrode terminal of the battery Ba1 and the positive electrode terminal of the battery Ba2. The other terminal of the resistor Ra2 is connected to one terminal of the switch SWa2, and the other terminal of the switch SWa2 is connected to one terminal of resistor Ra3 and a node between the negative electrode terminal of the battery Ba2 and the positive electrode terminal of the battery Ba3. The other terminal of the resistor Ra3 is connected to one terminal of the switch SWa3, and the other terminal of the switch SWa3 is connected to the negative electrode terminal of the battery Ba3. For example, when the switches SWa1 and SWa2 are set in the closed state and the switch SWa3 is set in the open state, the resistor Ra1 is electrically connected in parallel to the battery Ba1 and the resistor Ra2 is electrically connected in parallel to the battery Ba2, so that the batteries Ba1 and Ba2 are discharged, and the states of charge of the batteries Ba1 and Ba2 are decreased. Furthermore, when the switch SWa3 is set in the closed state and the switches SWa1 and SWa2 are set in the open state, the resistor Ra3 is electrically connected in parallel to the battery Ba3, so that the battery Ba3 is discharged, and the state of charge of the battery Ba3 is decreased.

Similarly to the cell balancing circuit CVa, the cell balancing circuit CVb is a passive cell balancing circuit in which the batteries Bb1, Bb2, and Bb3 are individually discharged. The cell balancing circuit CVb includes resistors Rb1, Rb2, and Rb3 and switches SWb1, SWb2, and SWb3. Note that the switches SWb1, SWb2, and SWb3 are each formed of a MOSFET or the like, and the controller Cnt performs control to switch each of them between a closed state in which current flows and an open state in which current does not flow.

One terminal of the resistor Rb1 is connected to the positive electrode terminal of the battery Bb1, the other terminal of the resistor Rb1 is connected to the one terminal of the switch SWb1, the other terminal of the switch SWb1 is connected to one terminal of the resistor Rb2 and a node between the negative electrode terminal of the battery Bb1 and the positive electrode terminal of the battery Bb2. The other terminal of the resistor Rb2 is connected to one terminal of the switch SWb2, and the other terminal of switch SWb2 is connected to one terminal of the resistor Rb3 and a node between the negative electrode terminal of the battery Bb2 and the positive electrode terminal of the battery Bb3. The other terminal of the resistor Rb3 is connected to one terminal of the switch SWb3, and the other terminal of the switch SWb3 is connected to the negative electrode terminal of the battery Bb3. For example, when the switches SWb1 and SWb2 are set in the closed state and the switch SWb3 is set in the open state, the resistor Rb1 is electrically connected in parallel to the battery Bb1 and the resistor Rb2 is electrically connected in parallel to the battery Bb2, so that the batteries Bb1 and Bb2 are discharged, and the states of charge of the batteries Bb1 and Bb2 are decreased. Furthermore, when the switch SWb3 is set in the closed state and the switches SWb1 and SWb2 are set in the open state, the resistor Rb3 is electrically connected in parallel to the battery Bb3, so that the battery Bb3 is discharged, and the state of charge of the battery Bb3 is decreased.

The data storage unit Str is formed of a random access memory (RAM), a read only memory (ROM), or the like and stores a cell balancing target battery B' or the like. The cell balancing target battery B' will be described later.

The controller Cnt is formed of a processor, a programmable device (a field programmable gate array (FPGA) and a programmable logic device (PLD)), or the like and executes a power supply process, a charging process, a cell balancing process, or the like.

### <Example of power supply process>

In response to an instruction for starting power supply, which is sent from a device (for example, a controller that controls vehicle travelling) located outside the power storage device PS, the controller Cnt starts the power supply process. In the power supply process, the controller Cnt sets the relays Rea, Reb, and ReLo in the closed states and sets the relay ReCh in the open state, which allows a power to be supplied from the battery packs BPa and BPb to the load Lo. When executing the power supply process, the controller Cnt also estimates a total state of charge of the battery packs BPa and BPb and causes the estimated state of charge to be displayed on a display, which is not illustrated, to inform a user of a state of the power storage device PS. In addition, in response to an instruction for ending the power supply, which is sent from the device located outside the power storage device PS, the controller Cnt ends the power supply process by setting the relays Rea, Reb, ReLo, and ReCh in the open states, which cannot supply the power from the battery packs BPa and BPb to the load Lo.

### <Example of charging process>

In response to an instruction for charging, which is sent from the device located outside the power storage device PS, the controller Cnt starts the charging process. In the charging process, the controller Cnt sets the relay Rea, Reb, ReCh in the closed states and sets the relay ReLo in the open state, which allows a power to be supplied from the charger Ch to the battery packs BPa and BPb, and then, sends a current instruction to the charger Ch. The charger Ch outputs a current in accordance with the current instruction sent from the power storage device PS to the power storage device PS. In addition, when at least one battery B of the batteries Ba1, Ba2, and Ba3 and the batteries Bb1, Bb2, and Bb3 is fully charged, the controller Cnt ends the charging process by setting a value of the current instruction to zero. For example, when executing the charging process, the controller Cnt performs constant current constant voltage (CCCV) charging control.

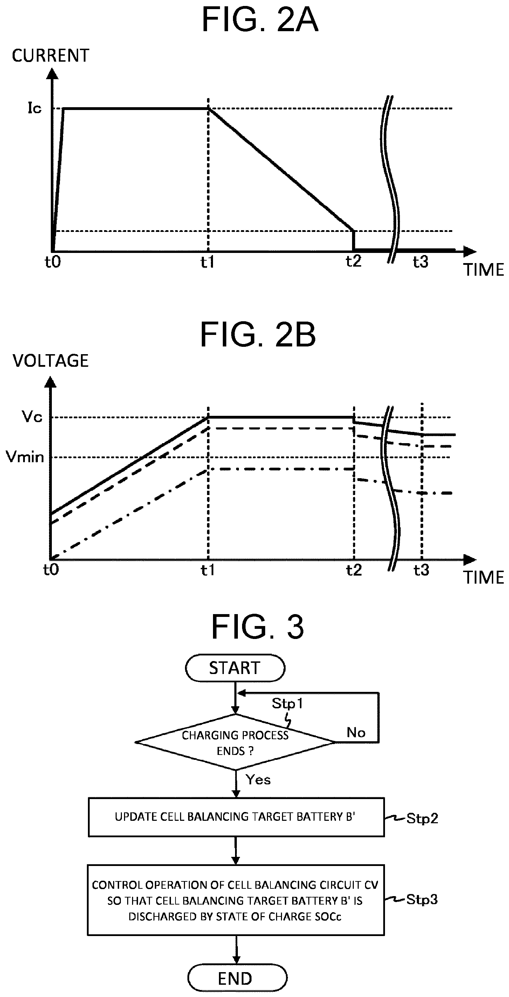

FIGS. 2A and 2B are views for explanation of the CCCV charging control; Note that in two-dimensional coordinates illustrated in FIG. 2A, a horizontal axis represents time and a vertical axis represents current. An example of the current la flowing through the battery pack BPa during the CCCV charging control is illustrated by a solid line in FIG. 2A. Furthermore, in two-dimensional coordinates illustrated in FIG. 2B, a horizontal axis represents time and a vertical axis represents voltage. Examples of the voltage Va1 of the battery Ba1, the voltage Va2 of the battery Ba2, and the voltage Va3 of the battery Ba3 are respectively illustrated by a solid line, a broken line, and a long dashed short dashed line in FIG. 2B. In the example illustrated in FIG. 2B, the states of charge of the batteries Ba1, Ba2, and Ba3 during a constant time Tc vary due to variations in an amount of the self-discharge of each of the batteries Ba1, Ba2, and Ba3, variations in the full charge capacity of each of the batteries Ba1, Ba2, and Ba3, and variations in the current consumption in the voltage detectors Sva1, Sva2, and Sva3, so that the voltage Va1 is larger than the voltage Va2 and the voltage Va2 is larger than the voltage Va3 at a start time t0 of the CCCV charging control.

First, when the controller Cnt starts the CCCV charging control at the start time t0, the controller Cnt sends a current instruction indicating a constant current Ic to the charger Ch every control cycle (a period of time shorter than a period of time from the start time t0 to a time t1, for example, a clock cycle of the controller Cnt) in the period of time from the start time t0 to the time t1. Then, as illustrated in FIG. 2A, the constant current Ic flows through the battery pack BPa in the period of time from the start time t0 to the time t1, and as illustrated in FIG. 2B, the voltages Va1, Va2, and Va3 gradually increase in the period of time from the start time t0 to the time t1.

Next, when the voltage Va1 reaches the constant voltage Vc at the time t1 earliest among the voltages Va1, Va2, and Va3, the controller Cnt gradually decreases the value of the current instruction every control cycle so that the voltage Va1 is kept at the constant voltage Vc in a period of time from the time t1 to a time t2. Then, as illustrated in FIG. 2B, in the period of time from the time t1 to the time t2, the battery Ba1 is kept so as to have the constant voltage Vc, and as illustrated in FIG. 2A, the current la flowing through the battery pack BPa gradually decreases in the period of time from the time t1 to the time t2.

Then, when the current la flowing through the battery pack BPa reaches a final current If or less at the time t2, the controller Cnt determines that the battery Ba1 is fully charged and ends the CCCV charging control by setting the value of the current instruction to zero. Note that as illustrated in FIG. 2A, when the current la flowing through the battery pack BPa reaches zero at the time t2, the voltages Va1, Va2, and Va3 drop at the time t2 as illustrated in FIG. 2B. The voltage drops of the voltages Va1, Va2, and Va3 correspond to a product of an internal resistor of the battery Ba1 and the final current If, a product of an internal resistor of the battery Ba2 and the final current If, and a product of an internal resistor of the battery Ba3 and the final current If, respectively. After that, the voltages Va1, Va2, and Va3 gradually decrease in a period of time from the time t2 to a time t3 when polarization of each of the batteries Ba1, Ba2, and Ba3 is eliminated.

### <Example of cell balancing process>

At the end of the charging process, the controller Cnt updates at least one of the cell balancing target batteries B' including the battery B that is fully charged, and then, controls operation of the cell balancing circuits CVa and CVb so that the updated cell balancing target battery B' is discharged by a state of charge SOCc (predetermined state of charge). Hereinafter, for the sake of description, the number of the updated cell balancing target batteries B' is defined as one.

FIG. 3 is a flowchart showing an example of operation of the controller Cnt when the controller Cnt executes the cell balancing process.

First, when the controller Cnt determines that the charging process of the battery pack BP ends (YES at Step Stp1), the controller Cnt identifies a new cell balancing target battery B' among the batteries Ba1, Ba2, and Ba3 and the batteries Bb1, Bb2, and Bb3, and updates battery data of the cell balancing target battery B' (Step Stp2) by overwriting data in the data storage unit Str so that the cell balancing target battery B' stored in the data storage unit Str is replaced with the identified cell balancing target battery B'.

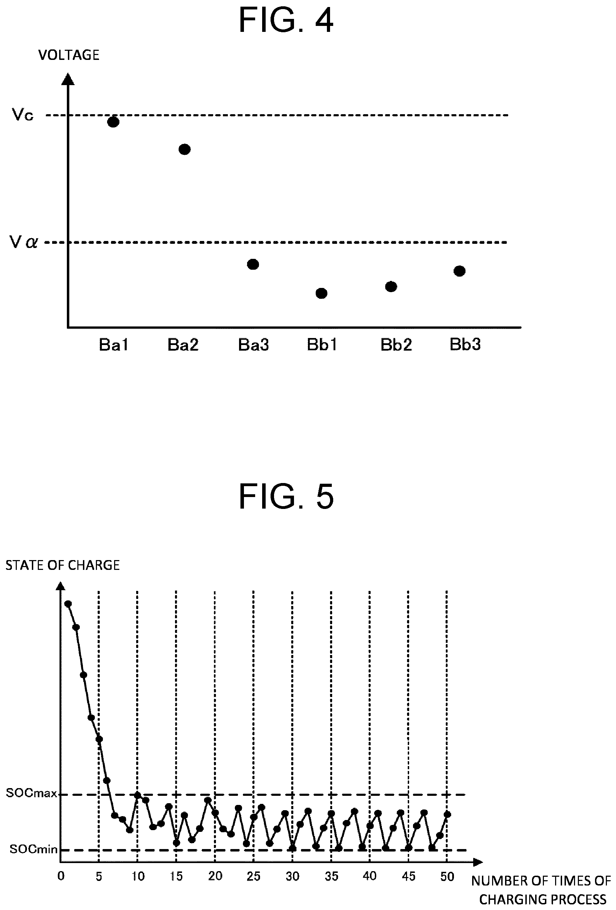

Here, FIG. 4 is a view for explanation of an example of a method of identifying the cell balancing target battery B'. Note that in two-dimensional coordinates illustrated in FIG. 4, a horizontal axis represents the batteries Ba1, Ba2, and Ba3 and the batteries Bb1, Bb2, and Bb3 and a vertical axis represents voltage. Furthermore, each of a plurality of points illustrated in FIG. 4 represents a voltage (closed circuit voltage) of each of the batteries Ba1, Ba2, and Ba3 and the batteries Bb1, Bb2, and Bb3 at the end of the charging process. Here, a voltage Vα is less than the constant voltage Vc, wherein the voltage Vα is determined based on parameters (such as a temperature and an output current from the charger Ch) related to an environment in which the power storage device PS is used.

For example, at the end of the charging process, the controller Cnt identifies each of the battery Ba1 and the battery Ba2 as the new cell balancing target battery B' among the batteries Ba1, Ba2, and Ba3 and the batteries Bb1, Bb2, and Bb3. Here, the battery Ba1 as the battery B that is fully charged has a voltage closest to the constant voltage Vc, and the battery Ba2 has a voltage within a range from the voltage Vα to the constant voltage Vc.

Next, in the flowchart illustrated in FIG. 3, after executing a process at Step Stp2, the controller Cnt controls the operation of the cell balancing circuits CVa and CVb so that the updated cell balancing target battery B' stored in the data storage unit Str is discharged by the state of charge SOCc (Step Stp3). For example, in a case where the batteries Ba1 and Ba2 as the updated cell balancing target batteries B' are stored in the data storage unit Str, the controller Cnt switches the switches SWa1 and SWa2 from the open states to the closed states and keeps the switch SWa3 and the switches SWb1, SWb2, and SWb3 in the open state. With this operation, currents flows from the batteries Ba1 and Ba2 through the resistors Ra1 and Ra2, respectively, so that the batteries Ba1 and Ba2 are discharged. In addition, when the voltage of the battery Ba1 drops by a voltage corresponding to the state of charge SOCc, the controller Cnt switches the switch SWa1 from the closed state to the open state. When the voltage of the battery Ba2 drops by the voltage corresponding to the state of charge SOCc, the controller Cnt switches the switch SWa2 from the closed state to the open state. For example, the controller Cnt refers to information (SOC-OCV characteristic) indicating a relationship between the state of charge of the battery B and an open circuit voltage of the battery B (a voltage of the battery B when current does not flow), which is stored in the data storage unit Str in advance, and obtains a state of charge corresponding to a measured voltage of the battery B. As a result, the state of charge of each of the batteries Ba1 and Ba2 is decreased by the state of charge SOCc.

Note that after executing the process at Step Stp2, the controller Cnt may execute a process at Step Stp3 immediately or at any point of time. For example, after executing the process at Step Stp2, the controller Cnt may execute the process at Step Stp3 at a point of time when the controller Cnt receives an instruction for starting cell balancing, at a point of time when a predetermined time has elapsed, or the like.

In addition, the state of charge SOCc is set to a value equal to or greater than a maximum value of an amount of difference in the state of charge between the batteries B, wherein the difference occurs at the constant time Tc interval due to the variations in the self-discharge of each of the batteries B, the variations in the full charge capacity of each of the batteries B, the variations in the current consumption in the voltage detectors Sv, or the like. For example, the state of charge SOCc is set to a value equal to or greater than a difference between a maximum value and a minimum value in the states of charge of the batteries B after the constant time Tc has elapsed since the states of charge of the batteries B coincide with each other. For example, the constant time Tc interval is set to an execution interval (such as one day, one week, or one month) of the charging process in a case where the charging process is periodically and repeatedly executed.

An upper limit value of the state of charge SOCc may be determined in advance so that the state of charge SOCc does not exceed an allowable value in the state of charge of the battery B. The allowable value in the state of charge of the battery B is, for example, a state of charge when one or more segments corresponding to a state of charge of the power storage device PS corresponds to one segment displayed on the display, which is not illustrated.

Thus, in the cell balancing process of the present embodiment, the cell balancing target battery B' is updated every time the charging process ends, and then, the state of charge of the updated cell balancing target battery B' is decreased by the state of charge SOCc at any point of time.

With this configuration, when the cell balancing process is executed, it is possible to make the state of charge of the cell balancing target battery B' close to the states of charge of the batteries B except for the cell balancing target battery B'. In addition, when the cell balancing process is executed, the states of charge of the batteries B except for the cell balancing target battery B' are prevented from decreasing, which increases a possibility that any of the batteries B except for the cell balancing target battery B' is updated as the cell balancing target battery B' in the next and subsequent charging process. Accordingly, since the charging process and the cell balancing process are repeatedly executed, the cell balancing target battery B' and any of the batteries B except for the cell balancing target battery B' are periodically replaced. This changes the state of charge of each of the batteries B within the constant range, so that a difference ΔSOC between the maximum value and the minimum value in the states of charge of the batteries B converges within a constant range. That is, in the power storage device PS including the plurality of the batteries B connected in series to each other, the states of charge of the batteries B are balanced.

FIG. 5 is a view illustrating an example of a relationship between the number of times of the charging process in the case where the charging process and the cell balancing process are alternately repeated and the difference ΔSOC between the maximum value and the minimum value in the states of charge of the batteries B. Note that in two-dimensional coordinates illustrated in FIG. 5, a horizontal axis represents the number of times of the charging process and a vertical axis represents state of charge. Each point illustrated in FIG. 5 shows the relationship between the number of times of the charging process and the difference ΔSOC. Here, a state of charge SOCmin is less than a state of charge SOCmax, wherein the state of charge SOCmin is a minimum state of charge of the battery B and the state of charge SOCmax is a maximum state of charge of the battery B.

In the example illustrated in FIG. 5, the difference ΔSOC is relatively large before the charging process and the cell balancing process are alternately and repeatedly executed (charging process: 0 times), and the difference ΔSOC gradually decreases as the number of times of the charging process increases from one to six. Then, the difference ΔSOC converges within a constant range from the state of charge SOCmin to the state of charge SOCmax as the number of times of the charging process increases from seven to fifty.

Here, assume a case where the states of charge in all of the batteries B are balanced at once using the SOC-OCV characteristic, as a comparative example of the present embodiment. In this case, since the batteries B need to be discharged so that the open circuit voltages of the batteries B coincide with each other, there is a concern that the states of charge of the batteries B cannot be balanced during charging and discharging. Furthermore, since it is necessary to wait until polarization that occurs in the batteries B after charging and discharging has been eliminated in order to measure the open circuit voltages with high accuracy, there is a concern that it takes a long time for the states of charge of the batteries B to be balanced. Thus, in the case where the states of charge of all of the batteries B are balanced at once using the SOC-OCV characteristic, an opportunity for balancing the states of charge of the batteries B is limited.

On the other hand, in the cell balancing process of the embodiment, after the cell balancing target battery B' is updated, the cell balancing target battery B' starts to be discharged at any point of time and the cell balancing target battery B' is discharged by the state of charge SOCc, so that the cell balancing process is executed even while the batteries B are charged or discharged. This increases frequency of executing the cell balancing process, which makes it possible to balance the states of charge of the batteries B by limiting the currents flowing from the batteries B through the corresponding resistors R when the cell balancing process is executed. As a result, the power storage device PS is manufactured with inexpensive components, which leads to a reduction in manufacturing cost of the power storage device PS.

In addition, assume a case where the battery B is formed of a lithium-ion iron phosphate battery.

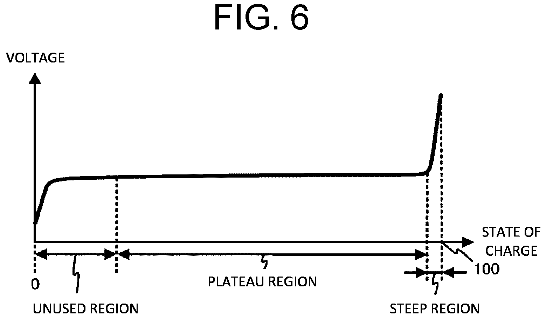

FIG. 6 is a view illustrating an example of a SOC-OCV characteristic in the battery B that is formed of the lithium-ion iron phosphate battery. Note that in two-dimensional coordinates illustrated in FIG. 6, a horizontal axis represents state of charge and a vertical axis represents voltage. An example of the SOC-OCV characteristic (curved line) that shows a relationship between the state of charge of the battery B and the open circuit voltage is illustrated by a solid line in FIG. 6.

In the SOC-OCV characteristic illustrated in FIG. 6, there are three regions each showing a range of the state of charge: an unused region where the battery B is prohibited from being used; a plateau region where an amount of change of the open circuit voltage per unit state of charge is relatively small; and a steep region where the amount of change of the open circuit voltage per unit state of charge is relatively large. Note that a minimum value of the state of charge in the unused region is defined as 0%, a maximum value of the state of charge in the unused region is defined as a value less than a minimum value of the state of charge in the plateau region, a maximum value of the state of charge in the plateau region is defined as a value less than a minimum value of the state of charge in the steep region, and a maximum value of the state of charge in the steep region is defined as 100%.

Thus, in the battery B having the SOC-OCV characteristic in which the plateau region is present, there is a concern that it is difficult to uniquely estimate the state of charge from the open-circuit voltage.

Here, assume a case where the states of charge of all of the batteries B are balanced at once using the SOC-OCV characteristic and each of the batteries B has the SOC-OCV characteristic in which the plateau region is present, as a comparative example of the present embodiment. In this case, when the state of charge corresponding to the measured open circuit voltage is within the plateau region, it is difficult to estimate the amount of difference in the state of charge between the batteries B. Here, there is a concern that it is impossible to balance the states of charge of the batteries B.

On the other hand, in the cell balancing process of the present embodiment, the states of charge of the batteries B are balanced without estimating the amount of difference in the state of charge between the batteries B, so that the states of charge of the batteries B are balanced even when each of the batteries B has the SOC-OCV characteristic in which the plateau region is present. That is, the power storage device PS of the present embodiment is suitable for balancing the states of charge of the batteries B each having the SOC-OCV characteristic in which the plateau region is present, such as the lithium-ion iron phosphate batteries.

The present invention is not limited to the above-described embodiment, and may be modified and improved within a gist of the present invention.

### <First modification>

In the above-described embodiment, in a case where a plurality of the cell balancing target batteries B' are identified when the cell balancing process is executed, the cell balancing target batteries B' are uniformly discharged by the state of charge SOCc. However, in a case where the states of charge of the batteries B are balanced to some extent, each of the cell balancing target batteries B' may be discharged by a different state of charge SOCc.

For example, when the cell balancing process is executed, in a case where the controller Cnt determines that the states of charges of the batteries B are balanced to some extent and identifies a plurality of the cell balancing target batteries B', the controller Cnt decreases the state of charge SOCc corresponding to each of the cell balancing target batteries B' in accordance with the voltage of the cell balancing target battery B'. For example, the controller Cnt determines that the states of charge of the batteries B are balanced to some extent when differences between values of the voltages of the batteries B and a minimum value in the voltages of the batteries B are all equal to or less than a threshold value, when the difference between a maximum value and a minimum voltage in the voltages of the batteries B is equal to or less than a threshold value, or when differences between values of the voltages of the batteries B and an average value in the voltages of the batteries B are all equal to or less than a threshold value. Alternatively, the controller Cnt determines that the states of charge of the batteries B are balanced to some extent when all voltages of the batteries B are within a voltage range corresponding to the steep region illustrated in FIG. 6.

In addition, for example, in a case where a difference between the voltage of the battery Ba1 (the maximum value in the voltages of the batteries B) and the voltage of the battery Bb1 (the minimum value in the voltages of the batteries B), which are illustrated in FIG. 4, is equal to or less than a threshold value and the batteries Ba1 and Ba2 are each identified as the cell balancing target battery B', the state of charge SOCc corresponding to the battery Ba1 is decreased by the state of charge corresponding to the voltage of the battery Ba1 (for example, the state of charge (0.05%) corresponding to a difference (0.05V) between the constant voltage Vc and the voltage of the battery Ba1) and the state of charge SOCc corresponding to the battery Ba2 is decreased by the state of charge corresponding to the voltage of the battery Ba2 (for example, the state of charge (0.5%) corresponding to a difference (0.5V) between the constant voltage Vc and the voltage of the battery Ba2). In this case, when the cell balancing process is executed, the controller Cnt controls the operation of the cell balancing circuits CVa and CVb so that the battery Ba1 is discharged by 0.05% lower state of charge SOCc and the battery Ba2 is discharged by 0.5% lower state of charge SOCc.

Thus, since the state of charge of each of the cell balancing target batteries B' is prevented from decreasing more than necessary even when the states of charge of the batteries B are balanced to some extent, the difference between the maximum value and the minimum value in the states of charge of the batteries B is prevented from diverging, which balances the states of charge of the batteries B with high accuracy.

### <Second modification>

In the above-described embodiment, at any point of time after the charging process ends, the battery B that is fully charged and has a voltage closest to the constant voltage Vc and the battery B except for the battery B that is fully charged, having a voltage within the range from the voltage Vα to the constant voltage Vc are identified among the batteries B as the new cell balancing target batteries B'. However, at any point of time after the charging process ends, only the battery B that is fully charged and has the voltage closest to the constant voltage Vc may be identified among the batteries B as the new cell balancing target battery B'.

Even with such a configuration, when the cell balancing process is executed, it is possible to make the states of charge of the cell balancing target batteries B' close to the states of charge of the batteries B except for the cell balancing target batteries B'. In addition, when the cell balancing process is executed, the states of charge of the batteries B except for the cell balancing target batteries B' are prevented from decreasing, which increases a possibility that any of the batteries B except for the cell balancing target battery B' is updated as the cell balancing target battery B' in the next and subsequent charging process. Accordingly, since the charging process and the cell balancing process are repeatedly executed, the cell balancing target battery B' and any of the batteries B except for the cell balancing target battery B' are periodically replaced. This changes the state of charge of each of the batteries B within the constant range, so that the difference ΔSOC between the maximum value and the minimum value in the states of charge of the batteries B converges within the constant range. That is, in the power storage device PS including the plurality of the batteries B connected in series to each other, the states of charge of the batteries B are balanced.

### <Third modification>

In the above-described embodiment, the cell balancing process is executed at any point of time after the charging process ends every time the charging process ends; however, the cell balancing process may be executed at every point of time when a predetermined time T has elapsed. For example, after the cell balancing process is executed, even when the battery B satisfies the full charge condition, the controller Cnt does not execute a next cell balancing process until the predetermined time T has elapsed.

Even with such a configuration, when the cell balancing process is executed, it is possible to make the state of charge of the cell balancing target battery B' close to the states of charge of the batteries B except for the cell balancing target battery B'. In addition, when the cell balancing process is executed, the states of charge of the batteries B except for the cell balancing target battery B' are prevented from decreasing, which increases the possibility that any of the batteries B except for the cell balancing target battery B' is identified as the cell balancing target battery B' in the next and subsequent charging process. Accordingly, since the charging process and the cell balancing process are repeatedly executed, the cell balancing target battery B' and any of the batteries B except for the cell balancing target battery B' are periodically replaced. This changes the state of charge of each of the batteries B within the constant range, so that the difference ΔSOC between the maximum value and the minimum value in the states of charge of the batteries B converges within the constant range. That is, in the power storage device PS including the plurality of the batteries B connected in series to each other, the states of charge of the batteries B are balanced.

### <Fourth modification>

In the above-described embodiment, the cell balancing process is executed at any point of time after the charging process ends every time the charging process ends or at every point of time when the predetermined time T has elapsed; however, when determining that the states of charge of the batteries B are balanced to some extent, the controller Cnt may reduce the frequency of executing the cell balancing process.

For example, when the controller Cnt determines that the states of charge of the batteries B are balanced to some extent, the controller Cnt executes the cell balancing process every time the charging process ends any number of times equal to or greater than two or every time a predetermined time T' longer than the predetermined time T has elapsed.

Thus, since the state of charge of each of the cell balancing target batteries B' is prevented from decreasing more than necessary even when the states of charge of the batteries B are balanced to some extent, the difference between the maximum value and the minimum value in the states of charge of the batteries B is prevented from diverging, which balances the states of charge of the batteries B with high accuracy.

### <Fifth modification>

In the above-described embodiment, the cell balancing target battery B' is updated based on the voltages of the batteries B at the end of the charging process; however, the controller Cnt may identify the cell balancing target battery B' based on the voltages of the batteries B at a point of time when a predetermined time t has elapsed since the charging process ends.

For example, the controller Cnt identifies, as the cell balancing target battery B', the battery Ba1 having the voltage closest to the constant voltage Vc, of the voltages of the batteries Ba1, Ba2, and Ba3 at the time t3 illustrated in FIG. 2B.

Even with such a configuration, when the cell balancing process is executed, it is possible to make the state of charge of the cell balancing target battery B' close to the states of charge of the batteries B except for the cell balancing target battery B'. In addition, when the cell balancing process is executed, the states of charge of the batteries B except for the cell balancing target battery B' are prevented from decreasing, which increases the possibility that any of the batteries B except for the cell balancing target battery B' is identified as the cell balancing target battery B' in the next and subsequent charging process. Accordingly, since the charging process and the cell balancing process are repeatedly executed, the cell balancing target battery B' and any of the batteries B except for the cell balancing target battery B' are periodically replaced. This changes the state of charge of each of the batteries B within the constant range, so that the difference ΔSOC between the maximum value and the minimum value in the states of charge of the batteries B converges within the constant range. That is, in the power storage device PS including the plurality of batteries B connected in series to each other, the states of charge of the batteries B are balanced.

### <Sixth modification>

In the above-described embodiment, the controller Cnt executes the cell balancing process for all of the batteries Ba1, Ba2, and Ba3 and the batteries Bb1, Bb2, and Bb3; however, the controller Cnt may individually execute the cell balancing process for the battery packs BPa and BPb.

This makes a total voltage of the battery pack BPa and a total voltage of the battery pack BPb close to each other, so that a return current flowing between the battery pack BPa and the battery pack BPb is prevented from increasing.

### <Seventh modification>

In the above-described embodiment, each of the cell balancing circuits CVa and CVb is the passive cell balancing circuit in which the power of the battery B is consumed at the corresponding resistor; however, the cell balancing circuits CVa and CVb may be an active cell balancing circuit in which the power of the cell balancing target battery B' is transferred to any of the batteries B except for the cell balancing target battery B'.

Note that when each of the cell balancing circuits CVa and CVb is the passive cell balancing circuit, circuit configurations of the cell balancing circuits CVa and CVb become relatively simple, which leads to a reduction in manufacturing cost of the power storage device PS.

## Claims

1. A power storage device (PS) comprising:
a plurality of batteries (B) connected in series;
a cell balancing circuit (CVa, CVb) configured to individually discharge the plurality of the batteries (B); and
a controller (Cnt) configured to execute a cell balancing process in which operation of the cell balancing circuit (CVa, CVb) is controlled so that at least one of cell balancing target batteries (B') is discharged by a predetermined state of charge (SOCc), the at least one of the cell balancing target batteries (B') including the battery (B) that is fully charged.

2. The power storage device (PS) according to claim 1, **characterized in that**
the predetermined state of charge (SOCc) is a value equal to or greater than a difference between a maximum value and a minimum value in states of charge of the plurality of the batteries (B), the difference occurring at a constant time (Tc) interval.

3. The power storage device (PS) according to claim 1, **characterized in that**
when the controller (Cnt) determines that states of charge of the plurality of the batteries (B) are balanced to some extent and identifies a plurality of the cell balancing target batteries, the controller (Cnt) decreases the predetermined state of charge (SOCc) corresponding to each of the cell balancing target batteries (B') in accordance with a voltage of the cell balancing target battery (B').

4. The power storage device (PS) according to claim 1, **characterized in that**
after the cell balancing process is executed, even when the battery (B) is fully charged, the controller (Cnt) does not execute a next cell balancing process until a predetermined time (T) has elapsed.

5. The power storage device (PS) according to claim 1, **characterized in that**
each of the plurality of the batteries (B') is a lithium-ion iron phosphate battery.

6. The power storage device (PS) according to claim 1, **characterized in that**
the controller (Cnt) identifies the at least one of the cell balancing target batteries (B') based on voltages of the plurality of the batteries (B) at a point of time when a predetermined time (t) has elapsed since a charging process for the batteries (B) ends.

7. The power storage device (PS) according to claim 1, further comprising:
a first battery pack (BPa) including a part of the plurality of the batteries (B) connected in series; and
a second battery pack (BPb) including the remaining batteries (B) of the plurality of the batteries (B) connected in series, **characterized in that**
the controller (Cnt) individually executes the cell balancing process for the first battery pack (BPa) and the second battery pack (BPb).

8. The power storage device (PS) according to claim 1, **characterized in that**
the controller (Cnt) executes the cell balancing process for a plurality of the cell balancing target batteries (B').

9. The power storage device (PS) according to claim 1, **characterized in that**
the cell balance circuit (CVa, CVb) is a passive cell balance circuit.
